# EUROPÄISCHE PATENTSCHRIFT

(11) **EP 0 525 422 B1**
(45) Veröffentlichungstag und Bekanntmachung des Hinweises auf die Patenterteilung: **06.11.1996**
(21) Anmeldenummer: 92111134.0
(22) Anmeldetag: 01.07.1992
(51) Int. Cl.: A01F 29/12, A01D 43/08

(54) **Nachzerkleinerungseinrichtung für Feldhäcksler**
Final comminution device for forage harvester
Broyeuse secondaire pour ramasseuse-hacheuse

(30) Priorität: 05.07.1991 DE 4122338
(43) Veröffentlichungstag der Anmeldung: 03.02.1993
(73) Patentinhaber: LANDTECHNIK AG SCHÖNEBECK, D-39218 Schönebeck (DE)
(72) Erfinder: Friel, Holger, Dipl.-Ing., O-2500 Rostock (DE); Schlegel, Christoph, O-2500 Rostock (DE)

(56) Entgegenhaltungen:
- EP-A- 0 176 678
- DE-A- 3 538 554
- FR-A- 2 539 950
- FR-A- 2 570 923
- FR-A- 2 571 214
- FR-A- 2 576 480
- FR-A- 2 588 775
- FR-A- 2 631 776

## Beschreibung

Die Erfindung betrifft einen Feldhäcksler mit einer Schneidwurftrommel bzw. Scheibenradhäcksler und einer im anschließenden Auswurfkanal angeordneten Nachzerkleinerungseinrichtung mit zwei gegensinnig angetriebenen Zerkleinerungswalzen, zwischen denen das Erntegut durchgesetzt wird.

Bei aktiven Nachzerkleinerungseinrichtungen wird das gehäckselte Erntegut zwangsläufig durch ein im Auswurfkanal angeordnetes Quetschwerk geleitet, um die Futterqualität zu erhöhen. Ausgebildet als Schrot- bzw. Quetschwalzen und teilweisen ortsfesten Gegenwerkzeugboden sind unterschiedliche Systeme bekannt (DE-OS 3302980). Bei den Walzen handelt es sich überwiegend um Glatt- oder Riffel-walzen mit unterschiedlichen Profilen oder Borsten (DE-PS 3537603). Nachteilig wirkt sich dabei das Verkleben bzw. Zusetzen der Riffelung auf die Erntequalität aus. Die hochgradige Nachzerkleinerung wird nicht erreicht. Um eine für die Funktion und der Leistungsbedarf der Nachzerkleinerungseinrichtung ungünstig starke Drosselung des durch die Schneidtrommel oder Scheibenrad im Auswurfkanal aufgebauten Luftstrom zu mindern, sind weiterhin zusätzliche Luftführungskanäle und Luftöffnungen erforderlich (DE-PS 3415508, DE-PS 3436372). Zum zusätzlichen Aufwand können auch an diesen Stellen Verstopfungen auftreten. Die geriffelten oder glatten Quetschwalzen, die zur Sicherung der Kornzerkleinerung sich mit unterschiedlichen Drehzahlen drehen müssen, bewirken bei der Zusammenführung des aufgefächerten Gutstromes zum Reibspalt eine Ablenkung und Verzögerung des Gutstromes und wirken durchsatzbegrenzend. Zur weiteren ungehinderten Beförderung des Erntegutes sind zusätzliche Nachbeschleuniger erforderlich. Der Erfindung liegt daher die Aufgabe zugrunde, eine universelle Nachzerkleinerungseinrichtung für Feldhäcksler so zu gestalten, daß das Erntegut wie gefordert zerkleinert wird und keine Nachbeschleuniger bzw. zusätzlichen Luftführungskanäle benötigt werden.

Erfindungsgemäß wird die Aufgabe dadurch gelöst, daß die Zerkleinerungswalzen aus mehreren ineinandergreifenden und auswechselbaren Keilscheiben bestehen, deren Keilflächen den Winkel 0 < α < 180° einschließen, die Keilscheiben an den Keilflächen keine oder unterschiedliche Profilierungen aufweisen und eine der Zerkleinerungswalzen im Bereich von 90° -α/2 bis 90° +α/2 zur Drehachse ausschwenkbar gelagert ist. über einen Hülltrieb von der Häckseleinrichtung werden die Zerkleinerungswalzen gegenläufig und mit einer annähernd gleichen Umfangsgeschwindigkeit angetrieben, wobei eine der Zerkleinerungswalzen bei Fremdkörpereinwirkung nicht senkrecht zur Drehachse, sondern unter dem halben Keilwinkel den die Keilflächen miteinander einschließen, auslenken kann.

Mit der Verwendung von Keilscheiben wird der definierte Reibspalt wesentlich verlängert und die Durchsatzfläche erhöht. Der durch die Häckseleinrichtung aufgebaute Luftstrom kann ungehindert zwischen der Gehäusewand und den Öffnungen bzw. Freiflächen der Keilscheiben hindurchströmen und trägt wesentlich zur Weiterbeförderung des Erntegutes nach der Nachzerkleinerung bei. Vorteilhaft ist auch weiterhin die der Durchgangsgeschwindigkeit angepaßte konstante Relativgeschwindigkeit im zackenförmigen Reibspalt, so daß der autgefächerte Erntegutstrom beim Zerkleinern nicht unnötig abgelenkt, noch verzögert wird. Zusätzliche Nachbeschleuniger sind somit nicht erforderlich.

Nachfolgend soll die Erfindung anhand eines Ausführungsbeispieles und der dazugehörigen Figuren erläutert werden.

Es zeigen:
Fig. 1 die Zerkleinerungswalzen mit den Keilscheiben in der Arbeitsstellung und in der Auslenkung
Fig. 2 einen Schnitt durch den Auswurfkanal mit den beiden Zerkleinerungswalzen
Fig. 3 die Keilscheiben mit den verschiedenen Profilierungen

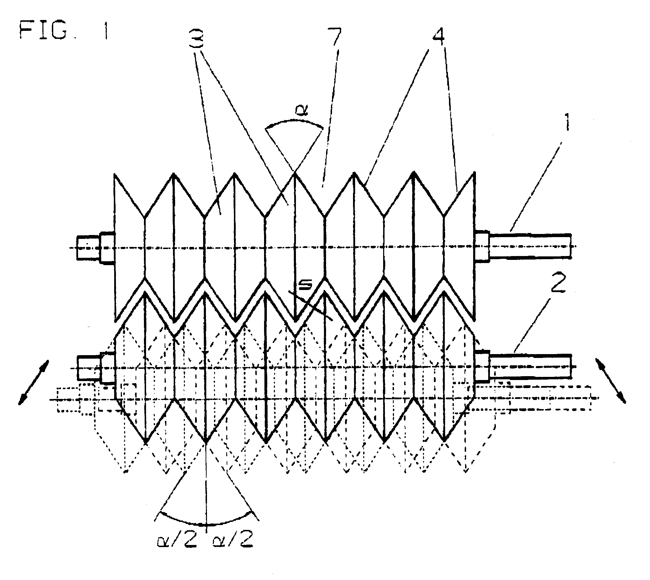

Gemäß Fig. 1 sind die Zerkleinerungswalzen 1 und 2 mit den ineinandergreifenden Keilscheiben 3 in Arbeitsstellung mit dem Reibspalt S dargestellt.

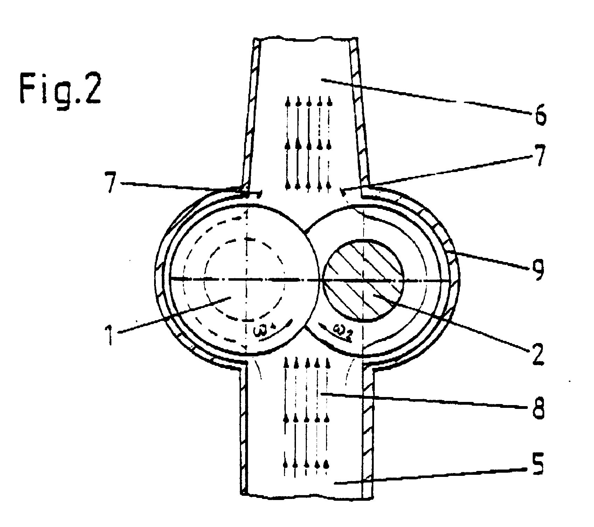

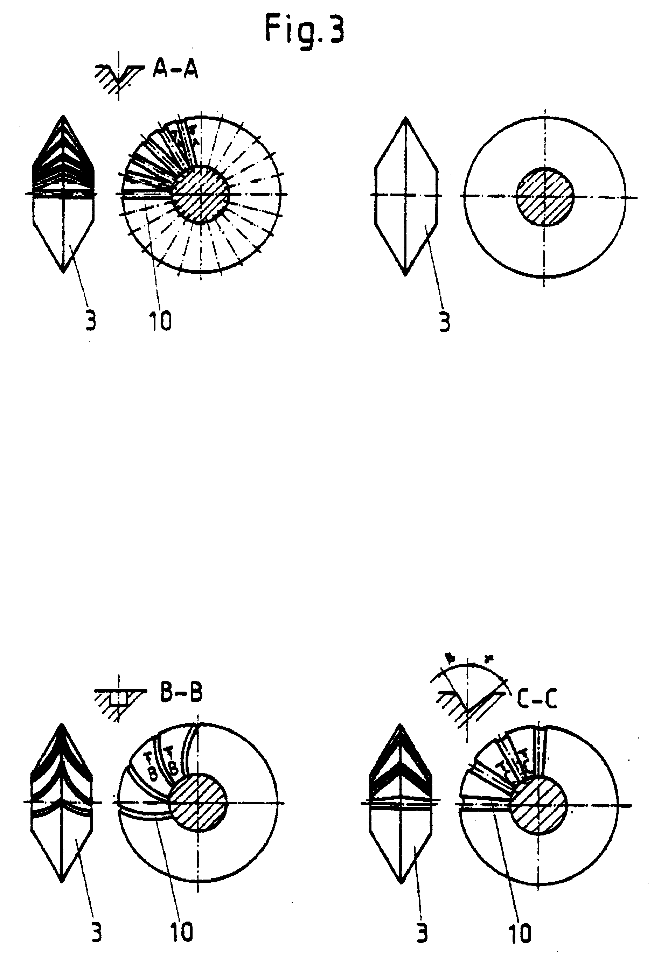

Die gestrichelte Kontur der Zerkleinerungswalze 2 zeigt die mögliche Auslenkung bei Fremdkörpereinwirkung unter dem Winkel α/2 an. Mittels nicht dargestellter Federn kann die Zerkleinerungswalze 2 in der entsprechenden Lage gehalten und zurückgeführt werden. Die Keilflächen 4 der Keilscheiben 3 können keine oder unterschiedliche Profilierungen 10 gemäß Fig. 3 aufweisen. In der Fig. 2 ist die Zerkleinerungseinrichtung im Schnitt dargestellt. Nach der nicht dargestellten Häckseleinrichtung wird der Gutstrom 8 in den Auswurfschacht 5 gefördert. Der weiterhin durch die Häckseleinrichtung aufgebaute Luftstrom wird ohne zusätzliche Luftkanäle durch den Luftkanal 7 zwischen der Gehäusewand 9 und den Keilflächen 4 der Keilscheiben 3 ungehindert in den Auswurfkanal 6 geleitet, wobei sich der Gutstrom 8 konzentriert durch den Reibspalt S zwischen den Zerkleinerungswalzen 1 und 2 bewegt und über den Auswurfkanal 6 ausgetragen wird. Eine zusätzliche Beschleunigungseinrichtung wird somit nicht mehr benötig.

In der Fig. 3 werden einige der möglichen Profilierungen 10 auf den Keilflächen 4 der Keilscheiben 3 dargestellt.

## Patentansprüche

1. Nachzerkleinerungseinrichtung für Feldhäcksler mit zwei gegensinnig angetriebenen Zerkleinerungswalzen, zwischen denen das Erntegut durchgesetzt wird, dadurch gekennzeichnet, daß die Zerkleinerungswalzen (1, 2) aus mehreren ineinandergreifenden und auswechselbaren Keilscheiben (3) bestehen, deren Keilflächen (4) den Winkel 0 < α < 180° einschließen, die Keilscheiben (3) an den Keilflächen (4) keine oder unterschiedliche Profilierungen (10) aufweisen und eine der Zerkleinerungswalzen (1, 2) im Bereich von 90° -α/2 bis 90° +α/2 zur Drehachse ausschwenkbar gelagert ist.

2. Nachzerkleinerungseinrichtung nach Anspruch 1., dadurch gekennzeichnet, daß durch die Gestaltung der Keilscheiben (3) zwischen der Gehäusewand (9) und den Keilflächen (4) der Keilscheiben (3) ein Luftkanal (7) gebildet wird.

3. Nachzerkleinerungseinrichtung nach Anspruch 1., dadurch gekennzeichnet, daß eine der ausschwenkbaren Zerkleinerungswalzen (1, 2) durch Federkraft in der jeweiligen Stellung zur anderen Walze gehalten wird.

## Claims

1. Rechopping assembly for forage harvesters with two chopper rolls driven in opposite directions between which the crop is put through, in which said chopper rolls (1, 2) are composed of a number of replaceable wedge discs (3) being in meshing contact, tapered faces (4) of which including the angle 0 < α < 180°, with tapered faces (4) of said wedge discs (3) being with or without differently shaped profiles (10), and with one of chopper rolls (1, 2) being supported so that it may swing out in the range from 90° - α/2 to 90° + α/2 relative to the axis of rotation.

2. Rechopping assembly according to claim 1, in which the design geometry of wedge discs (3) forms an air channel (7) between casing wall (9) and tapered faces (4) of wedge discs (3).

3. Rechopping assembly according to claim 1, in which one of swing-out chopper rolls (1, 2) is kept in its position relative to the other roll by spring force.

## Revendications

1. Dispositif de désintégration supplémentaire pour faucheuse-hacheuse avec deux cylindres de désintégration, entraînes en sens inverse, entre lesquelles passe le produit de la récolte, caracterisé par le fait, que les cylindres de désintégration (1, 2) sont composés de plusieurs disques cunéiformes (3) s'engrenant l'un avec l'autre et échangeables, dont les faces cunéiformes (4) renferment un angle de 0 < α < 180°, les faces cunéiformes des disques cunéiformes (3) n'ont pas de profilage ou ont des profilage différents (10) et un des cylindres de désintégration (1, 2) est monté pivotant vers l'extérieur par rapport à l'axe de rotation dans une zone de 90° - α/2 à 90° + α/2.

2. Dispositif de désintégration supplémentaire selon la spécification 1., caracterisé par le fait que, en raison du façonnage des disques cunéiformes (3), entre la paroi de la boîte (9) et les surfaces cunéiformes (4) des disques cunéiformes (3) est constitué un canal d'air (7).

3. Dispositif de désintégration supplémentaire selon la spécification 1., caracterisé par le fait, que un des cylindres de désintégration pivotants (1, 2) est retenu dans sa position respective par rapport à l'autre cylindre par l'effet de ressort.
